# EUROPÄISCHE PATENTSCHRIFT

(11) **EP 3 719 533 B1**
(45) Veröffentlichungstag und Bekanntmachung des Hinweises auf die Patenterteilung: **25.05.2022**
(21) Anmeldenummer: 19167530.5
(22) Anmeldetag: 05.04.2019
(51) Int. Cl.: G01S 13/42, G01S 13/48, G01S 13/88, G01S 13/91, G01S 13/92, G01S 7/02, G01S 13/02

(54) **MEHRDIMENSIONALE REFLEXIONSMIKROWELLENSCHRANKE**
MULTI-DIMENSIONAL REFLECTION MICROWAVE BARRIER
BARRIÈRE À MICRO-ONDES RÉFLÉCHISSANTE MULTIDIMENSIONNELLE

(43) Veröffentlichungstag der Anmeldung: 07.10.2020
(73) Patentinhaber: VEGA Grieshaber KG, 77709 Wolfach (DE)
(72) Erfinder: WELLE, Roland, 77756 Hausach (DE); WÄLDE, Steffen, 78078 Niedereschach (DE)
(74) Vertreter: Maiwald Patent- und Rechtsanwaltsgesellschaft mbH

(56) Entgegenhaltungen:
- EP-A1- 3 206 044
- EP-A1- 3 258 296

## Beschreibung

### Gebiet der Erfindung

Die Erfindung betrifft die Radarmesstechnik. Insbesondere betrifft die Erfindung eine mehrdimensionale Reflexionsmikrowellenschranke, Verwendungen einer derartigen mehrdimensionalen Reflexionsmikrowellenschranke, ein Verfahren zur Prozessautomatisierung im industriellen Umfeld, ein Programmelement und ein computerlesbares Medium.

### Hintergrund

Reflexionsmikrowellenschranken sind eine bestimmte Form von Radarmessgeräten, die in der Prozessautomatisierung im industriellen Umfeld eingesetzt werden können. Typische Anwendungen sind Füllstandmessung, Grenzstanderfassung und Objektdetektion.

Reflexionsmikrowellenschranken können einen durch die Hauptabstrahlrichtung der Mikrowellenantenne definierten, sich eindimensional in einen Überwachungsraum erstreckenden Bereich überwachen, indem die ausgesendeten und von einem Objekt reflektierten Mikrowellensignale, die auch als Radarsignale bezeichnet werden können, detektiert und ausgewertet werden.

EP 3 206 044 A1 beschreibt eine Vorrichtung zum Erkennen eines Objekts und ein entsprechendes Verfahren. Die Vorrichtung weist eine Sendevorrichtung, eine Empfangsvorrichtung und eine Ausweitevorrichtung auf. Die Sendevorrichtung sendet Signale aus. Die Empfangsvorrichtung empfängt Signale. Die Auswertevorrichtung vergleicht die von der Sendevorrichtung ausgesendeten Signale mit den von der Empfangsvorrichtung empfangenen Signalen und erzeugt ein Vergleichsergebnis. Zudem ermittelt die Auswertevorrichtung aus dem Vergleichsergebnis, ob sich das Objekt zwischen der Sendevorrichtung und der Empfangsvorrichtung befindet.

### Zusammenfassung

Es ist eine Aufgabe der Erfindung, Reflexionsmikrowellenschranken weiterzubilden. Diese Aufgabe wird durch die Gegenstände der unabhängigen Patentansprüche gelöst. Weiterbildungen der Erfindung ergeben sich aus den Unteransprüchen und der folgenden Beschreibung von Ausführungsformen.

Ein erster Aspekt betrifft eine mehrdimensionale Reflexionsmikrowellenschranke, eingerichtet zum Überwachen mehrerer zwei- oder dreidimensionaler Raumbereiche, die sich in unterschiedlichen Raumrichtungen zur Reflexionsmikrowellenschranke erstrecken.

Der Begriff "mehrdimensional" beschreibt die Eigenschaft der Reflexionsmikrowellenschranke, nacheinander verschiedene Raumbereiche überwachen zu können, wobei sich die verschiedenen Raumbereiche in unterschiedlichen Richtungen von der Reflexionsmikrowellenschranke befinden. Insbesondere kann die Reflexionsmikrowellenschranke eingerichtet sein, mehrere, an unterschiedlichen Orten positionierte dreidimensionale Raumbereiche gezielt nacheinander überwachen zu können.

Die Reflexionsmikrowellenschranke weist einen Mikrowellensender auf, der eingerichtet ist zum Erzeugen und Aussenden eines ersten Mikrowellensignals in Richtung eines ersten zwei- oder dreidimensionalen Raumbereichs und zum darauffolgenden Erzeugen und Aussenden eines zweiten Mikrowellensignals in Richtung eines zweiten zwei- oder dreidimensionalen Raumbereichs.

Es ist ein Mikrowellenempfänger vorgesehen, der eingerichtet ist zum Empfangen von Reflexionen des ersten und zweiten Mikrowellensignals. Der Mikrowellensender und der Mikrowellenempfänger sind in Form eines kombinierten Sende- und Empfangsmoduls ausgeführt.

Die Reflexionsmikrowellenschranke weist darüber hinaus eine Auswerte- oder Detektionseinheit auf, eingerichtet zum Auswerten der reflektierten ersten und zweiten Mikrowellensignale, um zu bestimmen, ob sich ein erstes Objekt im ersten Raumbereich und/oder ein zweites Objekt im zweiten Raumbereich befindet, und zur Erzeugung eines ersten Schaltsignals, falls sich das erste Objekt im ersten Raumbereich befindet, und eines zweiten Schaltsignals, falls sich das zweite Objekt im zweiten Raumbereich befindet.

Es kann vorgesehen sein, dass das sich das erste Schaltsignal und das zweite Schaltsignal voneinander unterscheiden. Es kann ergänzend vorgesehen sein, das erste Schaltsignal an einer ersten Schnittstelle nach außen hin bereitzustellen, und das zweite Schaltsignal an einer zweiten Schnittstelle nach außen hin bereitzustellen. Bei der ersten Schnittstelle und der zweiten Schnittstelle kann es sich beispielsweise um Transistorausgänge oder Relaisausgänge handeln, oder um gleichartige oder sich unterscheidende Busschnittstellen (IO-Link, 4..20mA).

Es kann alternativ auch vorgesehen sein, dass das erste Schaltsignal identisch dem zweiten Schaltsignal ist. Es kann insbesondere vorgesehen sein, das erste Schaltsignal und das zweite Schaltsignal an einer identischen Schnittstelle nach außen hin bereitzustellen.

Da die "Überwachungsbereiche", also der erste und der zweite Raumbereich, zwei oder drei Dimensionen aufweisen, kann in Verbindung mit einer in der Reflexionsmikrowellenschranke hinterlegten Kartierung, beispielsweise in Form einer digitalen Karte oder einer Schaltmatrix der zu überwachenden Bereiche, eine wesentlich verbesserte Mikrowellenschranke bereitgestellt werden. Dies stellt insbesondere für Anwendungen in der Fabrik- und Logistikautomatisierung, aber auch in der Sicherheitstechnik einen bedeutenden Mehrwert dar, der die Einsatzgebiete für solche Systeme signifikant erweitern kann. Insbesondere kann die mehrdimensionale Reflexionsmikrowellenschranke für die Prozessautomatisierung im industriellen Umfeld verwendet werden.

Unter dem Begriff "Prozessautomatisierung im industriellen Umfeld" kann ein Teilgebiet der Technik verstanden werden, welches alle Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Prozessautomatisierung im industriellen Umfeld betrifft die Logistikautomation. Mit Hilfe von Distanz- und Winkelsensoren werden im Bereich der Logistikautomation Abläufe innerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemein ist den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Prozessautomatisierung im industriellen Umfeld betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar.

Gemäß einer weiteren Ausführungsform weist die Auswerteeinheit einen Datenspeicher auf, in dem die Größe und/oder die Position und/oder die Form des ersten Raumbereichs und/oder die Größe und/oder die Position und/oder die Form des zweiten Raumbereichs hinterlegt sind. Die Mikrowellenschranke kann eingerichtet sein, diese definierten Raumbereiche zu überwachen, indem sie beispielsweise von dem Mikrowellensignal abgescannt werden.

Beispielsweise ist eine Benutzerschnittstelle vorgesehen, eingerichtet zum benutzerseitigen Definieren der Größe und/oder der Position und/oder der Form des ersten und zweiten Raumbereichs.

Es kann auch vorgesehen sein, dass weitere Raumbereiche für die Überwachung definiert werden.

Gemäß einer weiteren Ausführungsform ist die mehrdimensionale Reflexionsmikrowellenschranke eingerichtet zur digitalen Strahlumformung. Hierfür weist sie insbesondere eine Arrayantenne mit mehreren Strahlerelementen auf.

Gemäß einer weiteren Ausführungsform weist der Mikrowellensender eine Zeile von Sendeantennen bzw. Strahlerelementen und der Mikrowellenempfänger eine Spalte von Empfangsantennen bzw. Strahlerelementen auf, die senkrecht zueinander angeordnet sind.

Gemäß der Erfindung weist die Mikrowellenschranke ein Außengewinde am vorderen Bereich der Mikrowellenschranke auf, eingerichtet zum frontbündigen Einschrauben der Mikrowellenschranke in eine Befestigungsvorrichtung, insbesondere in eine Behälteröffnung. Gemäß einer weiteren Ausführungsform handelt es sich bei dem ersten Objekt um ein Füllgut oder ein Schüttgut und/oder bei dem zweiten Objekt um eine Person.

Auch kann es sich bei beiden Objekten um ein Fahrzeug handeln.

Gemäß der Erfindung weist die mehrdimensionale Reflexionsmikrowellenschranke ein Gehäuse auf, in dem sowohl der Mikrowellensender als auch der Mikrowellenempfänger und vorzugsweise auch die Auswerteeinheit angeordnet sind.

Gemäß der Erfindung weist das Gehäuse eine zylindrische Bauform auf. Alternativ oder zusätzlich zur digitalen Strahlsteuerung kann auch eine mechanische Schwenkvorrichtung vorgesehen sein, welche die Mikrowellenschranke verschwenkt.

Ein weiterer Aspekt betrifft die Verwendung einer oben und im Folgenden beschriebenen mehrdimensionalen Reflexionsmikrowellenschranke zur Objektüberwachung eines Objekts auf einem Förderband oder zur Überwachung eines Sicherheitsbereichs um ein Objekt herum, oder aber auch zur Mautüberprüfung von Fahrzeugen oder zur Geschwindigkeitsmessung von Fahrzeugen.

Im Zuge der Mautüberprüfung von Fahrzeugen kann die Mikrowellenschranke eingerichtet sein, erkennen zu können, um welche Art von Fahrzeug es sich handelt

(Lkw, Pkw, Pkw mit Anhänger, Bus, Motorrad). Zusätzlich dazu kann die Mikrowellenschranke eingerichtet sein, auch die Geschwindigkeit der Fahrzeuge zu messen. Dies erfolgt beispielsweise mittels Dopplermessung.

Insbesondere kann die mehrdimensionale Reflexionsmikrowellenschranke eingerichtet sein, mehrere Fahrspuren sequentiell zu überwachen.

Ein weiterer Aspekt betrifft ein Verfahren zur Prozessautomatisierung im industriellen Umfeld, zum Überwachen mehrerer zwei- oder dreidimensionaler Raumbereiche durch eine Reflexionsmikrowellenschranke, wobei sich die Raumbereiche in unterschiedlichen Raumrichtungen zur Reflexionsmikrowellenschranke erstrecken.

Ein weiterer Aspekt betrifft ein Programmelement, das, wenn es auf einer Auswerteeinheit einer Reflexionsmikrowellenschranke ausgeführt wird, die Reflexionsmikrowellenschranke anleitet, das oben und im Folgenden beschriebene Verfahren durchzuführen.

Ein weiterer Aspekt betrifft ein computerlesbares Medium, auf dem das oben beschriebene Programmelement gespeichert ist.

Im Folgenden werden mit Verweis auf die Figuren Ausführungsformen der Erfindung beschrieben. Werden in der folgenden Figurenbeschreibung die gleichen Bezugszeichen verwendet, so bezeichnen diese gleiche oder ähnliche Elemente. Die Darstellungen in den Figuren sind schematisch und nicht maßstäblich.

### Kurze Beschreibung der Figuren

Fig. 1 zeigt eine Reflexionsmikrowellenschranke zur Überwachung eines eindimensionalen Raumbereichs.
Fig. 2 zeigt eine mehrdimensionale Reflexionsmikrowellenschranke zum Überwachen mehrerer zwei- oder dreidimensionaler Raumbereiche.
Fig. 3 zeigt verschiedene Raumbereiche in einem Kugelkoordinatensystem.
Fig. 4 zeigt verschiedene Raumbereiche in einem Kartesischen Koordinatensystem.
Fig. 5 zeigt eine Reflexionsmikrowellenschranke mit Arrayantenne.
Fig. 6 zeigt mehrere dreidimensionale Raumbereiche.
Fig. 7 zeigt eine Reflexionsmikrowellenschranke mit einer anderen Arrayantenne.
Fig. 8 zeigt ein Flussdiagramm eines Verfahrens.

### Detaillierte Beschreibung von Ausführungsformen

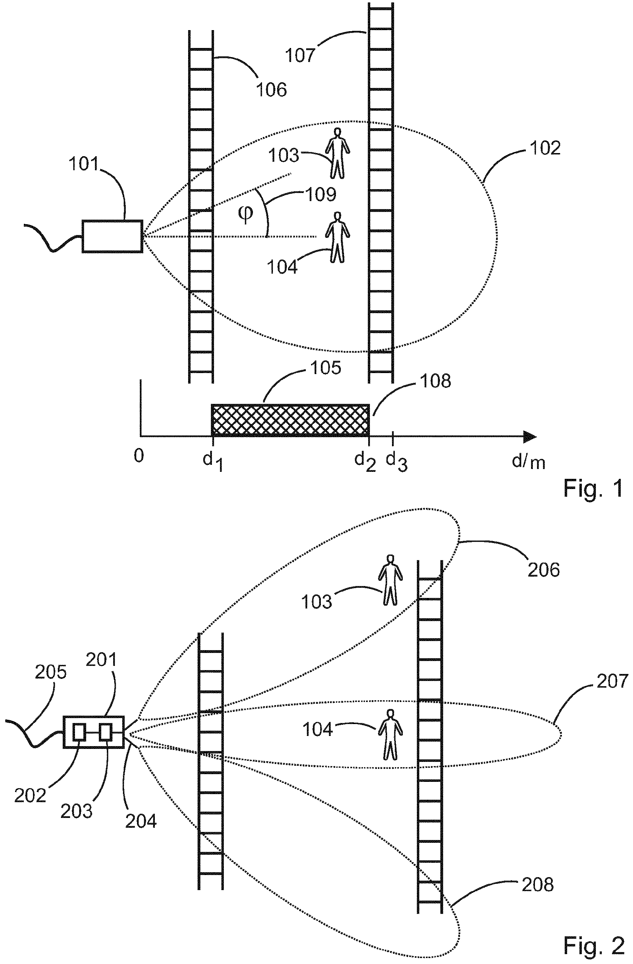

Fig. 1 zeigt eine Reflexionsmikrowellenschranke 101. Die dargestellte Ausführungsform entstammt der Sicherheitstechnik im Bahnbetrieb, kann aber auch auf Anwendungen in der Fabrik- oder Logistikautomation oder die Prozessmesstechnik übertragen werden.

Die Mikrowellenschranke 101 sendet ein Mikrowellensignal 102 aus. Die von den im Signalausbreitungsbereich 102 befindlichen Objekten 103, 104 reflektierten Signalanteile werden von der Mikrowellenschranke wieder erfasst, und weiter verarbeitet.

Jeder erfassten Reflektion 103, 104 wird eine Entfernung zugeordnet. Das System 101 erlaubt die Definition eines Überwachungsbereiches 105, welcher im vorliegenden Fall mit dem zu überwachenden Bereich zwischen zwei Bahngleisen 106, 107 definiert wird.

Die Reflektion des Objektes 104 löst folglich ein Schaltsignal aus, das in einer Schaltwarte das Ergreifen erforderlicher Maßnahmen zum sicheren Betrieb des Gesamtsystems ermöglicht. Das Objekt 103 wird durch den Erfassungsbereich 102 der Mikrowellenschranke 101 ebenfalls erfasst. Seine Entfernung zum Sensor 101 liegt aufgrund des Winkels Phi 109 zum Objekt 103 im Bereich 108 zwischen d2 und d3, welcher gerade nicht als Überwachungsbereich 105 definiert wurde. Ein sicherer Betrieb des Gesamtsystems kann folglich nicht erreicht werden, da das Objekt 103 singulär kein Schaltsignal der Mikrowellenschranke 101 auslösen würde.

Die zuvor aufgeführten Probleme resultieren aus der Größe des Erfassungsbereiches 102. Kleine Sensoren 101 können insbesondere für Anwendungen in der Fabrikautomation Abmessungen von typischerweise ½ Zoll oder ¾ Zoll im Durchmesser erreichen. Physikalisch führt diese Verringerung der Abstrahlfläche zu größeren Abstrahlwinkeln 102 im Antennendiagramm.

Fig. 2 zeigt eine Ausführungsform einer Reflexionmikrowellenschranke 201. Die mehrdimensional arbeitende Mikrowellenschranke besteht zumindest aus einer Sende-Empfangseinrichtung 204, einer Hochfrequenzeinheit 203 sowie einer Auswerte- oder Detektionseinheit 202.

Die Hochfrequenzeinheit 203 ist eingerichtet, hochfrequente Mikrowellensignale, insbesondere im Bereich zwischen 57 .. 71GHz, zwischen 75..85 GHz, zwischen 116..123GHz, zwischen 167..182GHz oder zwischen 231.5..250GHz, zu erzeugen, und über zumindest ein Antennenelement der Sende-Empfangseinrichtung 204 abzustrahlen. Die an den Objekten 103, 104 reflektierten Signalanteile werden von zumindest einer Antenne der Sende-Empfangseinrichtung 204 wieder empfangen, und in der Hochfrequenzeinheit 203 in niederfrequente Signale umgesetzt.

Die Detektionseinheit 202 digitalisiert diese niederfrequenten Signale, und bestimmt das Vorhandensein von Signalanteilen, welche von Reflektionen an den Objekten 103, 104 herrühren. Darüber hinaus bestimmt die Detektionseinheit anhand der Reflexionssignale zumindest die Entfernung und Winkellage zu den jeweiligen Objekten 103, 104.

Anhand vorab zumindest durch die Winkellage und Entfernung definierter, in der Detektionseinheit hinterlegter Schaltbereiche 302, 303 kann ein Schaltsignal erzeugt werden, und am Ausgang 205 der Reflexionsmikrowellenschranke 201 analog und/oder digital bereitgestellt werden. Es kann hierbei insbesondere vorgesehen sein, das Schaltsignal an einer IO-Link Schnittstelle bereitzustellen. Es kann auch vorgesehen sein, dass der Sensor 201 seine gesamte Energie aus der IO-Link Schnittstelle bezieht.

Die Bestimmung der Winkellage Phi 109 zu den einzelnen Reflexionsobjekten kann im Zusammenspiel der Komponenten 202, 203, 204 auf unterschiedliche Weise erfolgen. Es kann vorgesehen sein, die Hauptstrahlrichtung der Sendesignale durch mechanisches Verstellen zumindest einer Sendeantenne zu verändern, und in einem Zeitmultiplex verschiedene Richtungen 206, 207, 208 anzusteuern. Es kann auch vorgesehen sein, die Veränderung der Hauptstrahlrichtung unter Einsatz mehrerer Sendeantennen und Phasenschiebern durch analoge Strahlformung zu realisieren. Es kann auch vorgesehen sein, die Abstrahlcharakteristika 206, 207, 208 der Sendeantennen während eines Messzyklus zu verändern.

Es kann vorgesehen sein, hochintegrierte Radarchips im Sensor 201 zu verwenden. Es kann auch vorgesehen sein, über mehrere Empfangsantennen eine digitale Strahlformung durchzuführen. Möglich ist auch, die zuvor genannten Prinzipien zu kombinieren, parallel oder sequenziell zu aktivieren.

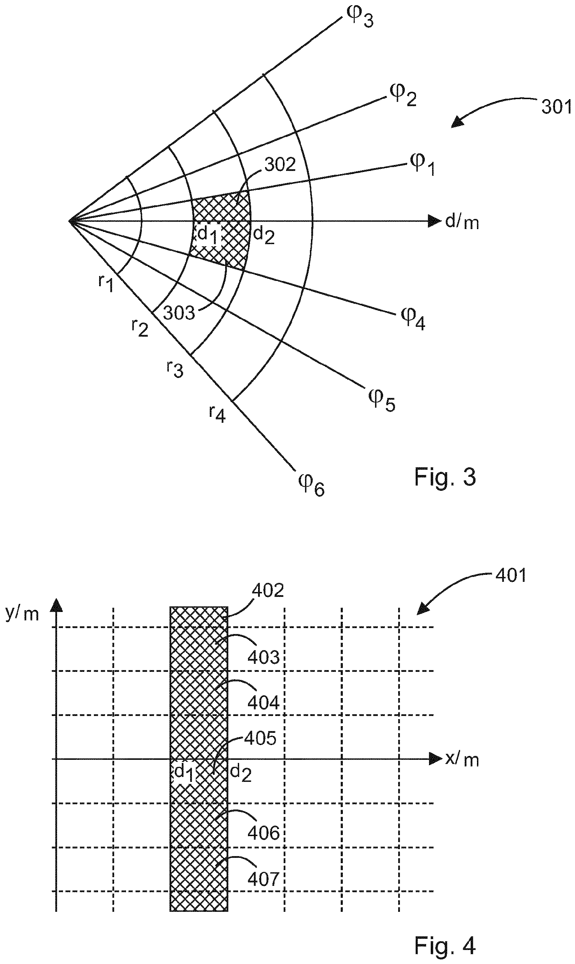

Fig. 3 zeigt die in der Detektionseinheit 202 hinterlegten Schaltbereiche. Die Bereiche zwischen d1 und d2 in Entfernungsrichtung und zwischen Phi1 und Phi4 in Winkelrichtung sollen von der Reflexionsmikrowellenschranke überwacht werden, welche bei Detektion einer Reflektion im entsprechenden Bereich ein Schaltsignal auslöst. Die Schaltbereiche 301 können vom Benutzer (PC-Bedienung, Smartphone-Bedienung, Tablet, Einlernen, etc.) im Sensor definiert werden.

Abhängig vom Anwendungsszenario kann eine Definition von Schaltbereichen durch Polarkoordinaten gemäß Fig. 3 ungünstig sein. Es kann ergänzend oder alternativ vorgesehen sein, eine Definition von Schaltbereichen in einem kartesischen Koordinatensystem durchzuführen. Fig. 4 zeigt ein entsprechendes Beispiel. Die Visualisierung und Eingabe von Schaltbereichen 402, 403, 404, 405, 406, 407 kann somit deutlich intuitiver und genauer erfolgen. Im vorliegenden Anwendungsszenario der Fig. 1 würde eine Schaltmatrix 401 gemäß Fig. 4 ein Schaltsignal genau dann auslösen, wenn in zumindest einer der Zellen 402, 403, 404, 405, 406, 407 eine Reflexion eines Objektes detektiert wird.

In EP 3 258 296 A1 werden verschiedene Verfahren vorgestellt, mit Hilfe derer ein ggf. bereits in einem Überwachungsbereich 402, 403, 404, 405, 406, 407 vorhandener Reflektor, welcher kein Schaltsignal auslösen soll, berücksichtigt werden kann. Die dort offenbarten Verfahren können in Verbindung mit den hier offenbarten mehrdimensionalen Reflexionsmikrowellenschranken kombiniert werden. Insbesondere können ergänzend oder alternativ in einer Art Negativliste auch Schaltbereiche 302, 402, 403, 404, 405, 406, 407 definiert werden, in welchen kein Schaltsignal ausgelöst werden soll.

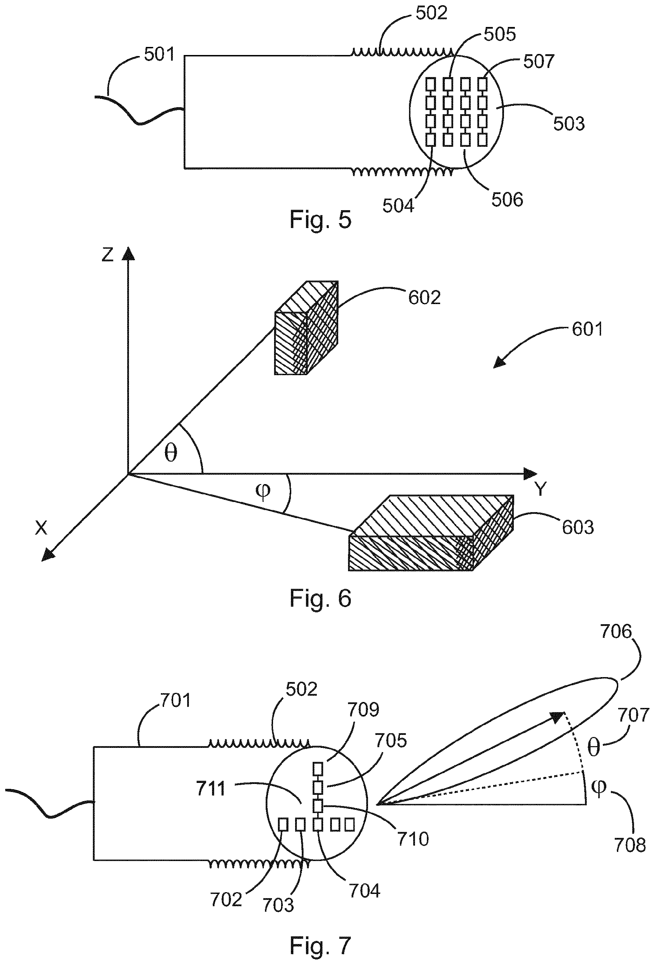

Fig. 5 zeigt eine erfindungsgemäße Mikrowellenschranke 201. Die Mikrowellenschranke kann ihre gesamte für den Betrieb erforderliche Energie über eine IO-Link Verbindung 501 beziehen. Es kann auch vorgesehen sein, die gesamte für den Betrieb erforderliche Energie über eine 4..20mA Schnittstelle zu beziehen. Die Sende-Empfangseinrichtung 503 weist einen Durchmesser von ¾ Zoll oder weniger auf, und ermöglicht in Verbindung mit einem Gewinde 502 einen einschraubbaren Sensor, welcher erfindungsgemäß frontbündig einschraubbar ist. Die Sendeantennen 504, 505, 506, 507 und/oder Empfangsantennen 504, 505, 506, 507 ermöglichen in Verbindung mit der nicht dargestellten Hochfrequenzeinheit ein analoges und/oder digitales Strahlformen. Es kann hierzu insbesondere vorgesehen sein, die Antennen sequentiell und/oder parallel mit Hochfrequenzsignale zu beaufschlagen.

Fig. 6 zeigt eine Schaltmatrix 601 einer weiteren Ausführungsform einer Mikrowellenschranke 701. Wird das Strahlformen in zwei Dimensionen realisiert, d.h. kann die Sende- und/oder Empfangsrichtung der Mikrowellenschranke sowohl in Theta als auch in Phi Richtung verändert werden, so können die Schaltbereiche 602, 603 im dreidimensionalen Raum definiert werden, wobei hierzu sowohl Kugelkoordinaten als auch kartesische Koordinaten alternativ oder parallel vom Sensor verarbeitet werden können.

Fig. 7 zeigt eine mehrdimensionale Reflexionsmikrowellenschranke, bei welcher die Sendeantennen 702, 703, 704 und die Empfangsantennen 705, 709, 710 in einer Reihe und einer Spalte orthogonal zueinander angeordnet sind. Der Sensor 701 kann durch analoge und/oder digitale Strahlformung die Hauptsenderichtung 706 und/oder die Hauptempfangsrichtung 706 der Sende-Empfangseinrichtung 711 sowohl in horizontaler Winkelrichtung Phi 708 als auch in vertikaler Winkelrichtung Theta 707 verändern, und somit die genaue Lage eines Objektes im Raum anhand seiner Reflektion in Kugelkoordinaten ermitteln. Nach Umsetzung in kartesische Koordinaten und Vergleich mit der Schaltmatrix 601 kann dann ein Schaltsignal ausgelöst werden.

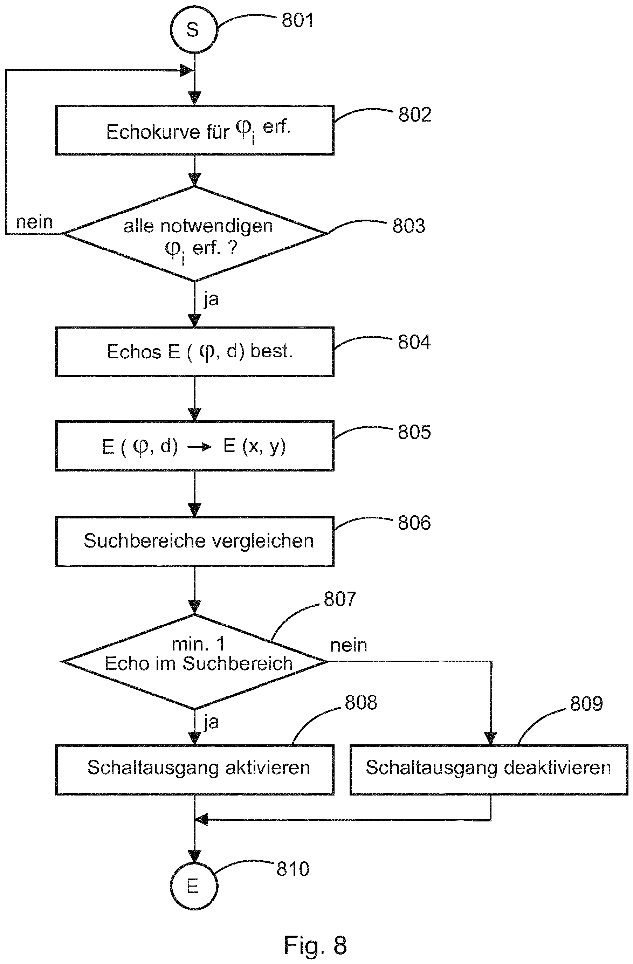

Fig. 8 zeigt ein Ablauf eines Sensorzyklus, der mit Schritt 801 startet. Im Schritt 802 werden mehrere Echokurven für unterschiedliche Winkellagen Phi bestimmt. Im Schritt 803 wird überprüft, ob (in Abhängigkeit von den Benutzereingaben) hinreichend viele Echokurven für die benötigten Winkelablagen erfasst worden sind. Im Schritt 804 werden die Echos in den Echokurven bestimmt, und zumindest mit zwei koordinatenbestimmende Kennwerte im Speicher abgelegt. Im Schritt 805 werden die Kennwerte der Echos in kartesische Koordinaten überführt. Im Schritt 806 werden die vorhandenen Echos unter Zuhilfenahme der Schaltmatrix 401 mit den Suchbereichen 402, 403, 404, 405, 406, 407 verglichen, was im Schritt 807 dazu verwendet wird, zu entscheiden, ob zumindest ein Echo in einem Suchbereich vorhanden ist. Ist dies der Fall, so wird im Schritt 808 der Schaltausgang aktiviert, andernfalls wird in 809 der Schaltausgang deaktiviert. Die zuletzt genannten Schritte können beispielsweise auch eine Bereitstellung des Schaltzustandes über IO-Link beinhalten. Das Verfahren endet mit Schritt 810.

Ergänzend sei daraufhingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Mehrdimensionale Reflexionsmikrowellenschranke (100), eingerichtet zum Überwachen mehrerer zwei- oder dreidimensionaler Raumbereiche (602, 603), die sich in unterschiedlichen Raumrichtungen zur Reflexionsmikrowellenschranke erstrecken, aufweisend:
einen Mikrowellensender (203, 204, 711), eingerichtet zum Erzeugen und Aussenden eines ersten Mikrowellensignals in Richtung eines ersten zwei- oder dreidimensionalen Raumbereichs (602) und zum darauffolgenden Erzeugen und Aussenden eines zweiten Mikrowellensignals in Richtung eines zweiten zwei- oder dreidimensionalen Raumbereichs (603);
einen Mikrowellenempfänger (204, 711), eingerichtet zum Empfangen von Reflexionen des ersten und zweiten Mikrowellensignals;
eine Auswerteeinheit (202), eingerichtet zum Auswerten der Reflexionen des ersten und zweiten Mikrowellensignals, um zu bestimmen, ob sich ein erstes Objekt (103) im ersten Raumbereich oder ein zweites Objekt (104) im zweiten Raumbereich befindet, und zur Erzeugung eines ersten Schaltsignals, falls sich das erste Objekt im ersten Raumbereich befindet, und eines zweiten Schaltsignals, falls sich das zweite Objekt im zweiten Raumbereich befindet;
wobei der Mikrowellensender und der Mikrowellenempfänger in Form eines kombinierten Sende- und Empfangsmoduls ausgeführt sind;
weiter aufweisend:
ein Gehäuse, in dem der Mikrowellensender (203, 204, 711) und der Mikrowellenempfänger (204, 711) angeordnet sind, wobei das Gehäuse eine zylindrische Bauform aufweist;
wobei die Reflexionsmikrowellenschranke **gekennzeichnet ist durch** ein Außengewinde (502) am vorderen Bereich der Reflexionsmikrowellenschranke, eingerichtet zum frontbündigen Einschrauben der Reflexionsmikrowellenschranke in eine Befestigungsvorrichtung, insbesondere eine Behälteröffnung.

2. Mehrdimensionale Reflexionsmikrowellenschranke (100) nach Anspruch 1,
wobei die Auswerteeinheit (202) einen Datenspeicher aufweist, in dem die Größe und die Position der ersten Raumbereichs (602) und die Größe und die Position des zweiten Raumbereichs (603) hinterlegt sind.

3. Mehrdimensionale Reflexionsmikrowellenschranke (100) nach Anspruch 2, weiter aufweisend:
eine Benutzerschnittstelle (501), eingerichtet zum benutzerseitigen Definieren der Größe und/oder der Position des ersten und zweiten Raumbereichs (602, 603).

4. Mehrdimensionale Reflexionsmikrowellenschranke (100) nach einem der vorhergehenden Ansprüche,
eingerichtet zur digitalen Strahlformung.

5. Mehrdimensionale Reflexionsmikrowellenschranke (100) nach einem der vorhergehenden Ansprüche,
wobei der Mikrowellensender (203, 204, 711) eine Zeile von Sendeantennen (702, 703, 704) und der Mikrowellenempfänger (204, 711) eine Spalte von Empfangsantennen (705, 709, 710) aufweist, die senkrecht zueinander angeordnet sind.

6. Mehrdimensionale Reflexionsmikrowellenschranke (100) nach einem der vorhergehenden Ansprüche,
wobei es sich bei dem ersten Objekt (103) um ein Füllgut oder ein Schüttgut handelt; und/oder
wobei es sich bei dem zweiten Objekt (104) um eine Person handelt.

7. Verwendung einer mehrdimensionalen Reflexionsmikrowellenschranke (100) nach einem der Ansprüche 1 bis 6 zur Objektüberwachung auf einem Förderband oder zur Überwachung eines Sicherheitsbereichs.

8. Verwendung einer mehrdimensionalen Reflexionsmikrowellenschranke (100) nach einem der Ansprüche 1 bis 6 zur Mautüberprüfung von Fahrzeugen.

9. Verwendung einer mehrdimensionalen Reflexionsmikrowellenschranke (100) nach einem der Ansprüche 1 bis 6 zur Geschwindigkeitsmessung von Fahrzeugen.

10. Verfahren zur Prozessautomatisierung im industriellen Umfeld, zum Überwachen mehrerer zwei- oder dreidimensionaler Raumbereiche (602, 603) durch eine Reflexionsmikrowellenschranke (100) nach einem der Ansprüche 1 bis 6, wobei sich die Raumbereiche in unterschiedlichen Raumrichtungen zur Reflexionsmikrowellenschranke erstrecken, aufweisend die Schritte:
Erzeugen und Aussenden eines ersten Mikrowellensignals in Richtung eines ersten zwei- oder dreidimensionalen Raumbereichs (602) und zum darauffolgenden Erzeugen und Aussenden eines zweiten Mikrowellensignals in Richtung eines zweiten zwei- oder dreidimensionalen Raumbereichs (603);
Empfangen von Reflexionen des ersten und zweiten Mikrowellensignals;
Auswerten der Reflexionen des ersten und zweiten Mikrowellensignals, um zu bestimmen, ob sich ein erstes Objekt (103) im ersten Raumbereich oder ein zweites Objekt (104) im zweiten Raumbereich befindet, und zur Erzeugung eines ersten Schaltsignals, falls sich das erste Objekt im ersten Raumbereich befindet, und eines zweiten Schaltsignals, falls sich das zweite Objekt im zweiten Raumbereich befindet.

11. Programmelement, das, wenn es auf einer Auswerteeinheit (202) einer Reflexionsmikrowellenschranke (100) ausgeführt wird, die Reflexionsmikrowellenschranke anleitet, das Verfahren nach Anspruch 10 durchzuführen.

12. Computerlesbares Medium, auf dem ein Programmelement nach Anspruch 11 gespeichert ist.

## Claims

1. Multidimensional reflection microwave barrier (100) set up to monitor a plurality of two- or three-dimensional spatial regions (602, 603) extending in different spatial directions with respect to the reflection microwave barrier, comprising:
a microwave transmitter (203, 204, 711) set up to generate and transmit a first microwave signal towards a first two- or three-dimensional spatial region (602) and subsequently to generate and transmit a second microwave signal towards a second two- or three-dimensional spatial region (603);
a microwave receiver (204, 711) set up to receive reflections of the first and second microwave signals;
an evaluation unit (202) set up to evaluate the reflections of the first and second microwave signal so as to determine whether a first object (103) is located in the first spatial region or a second object (104) in the second spatial region and to generate a first switch signal if the first object is located in the first spatial region and a second switch signal if the second object is located in the second spatial region;
the microwave transmitter and the microwave receiver being configured in the form of a combined transceiver module;
further comprising:
a housing in which the microwave transmitter (203, 204, 711) and the microwave receiver (204, 711) are arranged, the housing being of a cylindrical construction;
the reflection microwave barrier being **characterised by** an external thread (502) on the front region of the reflection microwave barrier, set up for screwing the reflection microwave barrier into a fastening device, in particular a container opening, in a manner flush with the front.

2. Multidimensional reflection microwave barrier (100) according to claim 1,
wherein the evaluation unit (202) has a data store in which the size and position of the first spatial region (602) and the size and position of the second spatial region (603) are stored.

3. Multidimensional reflection microwave barrier (100) according to claim 2, further comprising:
a user interface (501) set up for the user to define the size and/or position of the first and second spatial regions (602, 603) .

4. Multidimensional reflection microwave barrier (100) according to any of the preceding claims,
set up for digital beam shaping.

5. Multidimensional reflection microwave barrier (100) according to any of the preceding claims,
wherein the microwave transmitter (203, 204, 711) comprises a row of transmitting antennae (702, 703, 704) and the microwave receiver (204, 711) comprises a column of receiving antennae (705, 709, 710), which are arranged mutually perpendicular.

6. Multidimensional reflection microwave barrier (100) according to any of the preceding claims,
wherein the first object (103) is a filling material or a bulk material; and/or
wherein the second object (104) is a person.

7. Use of a multidimensional reflection microwave barrier (100) according to any of claims 1 to 6 for object monitoring on a conveyor belt or for monitoring a safety zone.

8. Use of a multidimensional reflection microwave barrier (100) according to any of claims 1 to 6 for road charge checking of vehicles.

9. Use of a multidimensional microwave barrier (100) according to any of claims 1 to 6 for measuring the speed of vehicles.

10. Method for process automation in an industrial setting, for monitoring of a plurality of two- or three-dimensional spatial regions (602, 603) by a reflection microwave barrier (100) according to any of claims 1 to 6, the spatial regions extending in different spatial directions with respect to the reflection microwave barrier, comprising the steps of:
generating and transmitting a first microwave signal towards a first two- or three-dimensional spatial region (602) and subsequently generating and transmitting a second microwave signal towards a second two- or three-dimensional spatial region (603);
receiving reflections of the first and second microwave signals;
evaluating the reflections of the first and second microwave signals so as to determine whether a first object (103) is located in the first spatial region or a second object (104) in the second spatial region and to generate a first switch signal if the first object is located in the first spatial region and a second switch signal if the second object is located in the second spatial region.

11. Program element which, when run on an evaluation unit (202) of a reflection microwave barrier (100), instructs the reflection microwave barrier to perform the method according to claim 10.

12. Computer-readable medium on which a program element according to claim 11 is stored.

## Revendications

1. Barrière à micro-ondes par réflexion multidimensionnelle (100), conçue pour surveiller plusieurs zones d'espace bi- ou tridimensionnelles (602, 603) qui s'étendent dans différentes directions de l'espace par rapport à la barrière à micro-ondes par réflexion, comprenant :
un émetteur de micro-ondes (203, 204, 711), conçu pour générer et émettre un premier signal micro-ondes en direction d'une première zone d'espace bi- ou tridimensionnelle (602) et pour générer et émettre ensuite un deuxième signal micro-ondes en direction d'une deuxième zone d'espace bi- ou tridimensionnelle (603) ;
un récepteur de micro-ondes (204, 711), conçu pour recevoir des réflexions des premier et deuxième signaux micro-ondes ;
une unité d'évaluation (202), conçue pour évaluer les réflexions des premier et deuxième signaux micro-ondes afin de déterminer si un premier objet (103) se trouve dans la première zone d'espace ou un deuxième objet (104) dans la deuxième zone d'espace, et pour générer un premier signal de commutation si le premier objet se trouve dans la première zone d'espace et un deuxième signal de commutation si le deuxième objet se trouve dans la deuxième zone d'espace ;
l'émetteur de micro-ondes et le récepteur de micro-ondes étant réalisés sous la forme d'un module d'émission et de réception combiné ;
présentant en outre :
un boîtier dans lequel l'émetteur de micro-ondes (203, 204, 711) et le récepteur de micro-ondes (204, 711) sont disposés, le boîtier ayant une forme de construction cylindrique ;
la barrière à micro-ondes par réflexion étant **caractérisée par** un filetage extérieur (502) sur la zone avant de la barrière à micro-ondes par réflexion, conçu pour le vissage en affleurement frontal de la barrière à micro-ondes par réflexion dans un dispositif de fixation, en particulier une ouverture de récipient.

2. Barrière à micro-ondes par réflexion multidimensionnelle (100) selon la revendication 1,
dans laquelle l'unité d'évaluation (202) présente une mémoire de données dans laquelle sont enregistrées la taille et la position de la première zone d'espace (602) et la taille et la position de la deuxième zone d'espace (603) .

3. Barrière à micro-ondes par réflexion multidimensionnelle (100) selon la revendication 2, présentant en outre :
une interface utilisateur (501), conçue pour permettre la définition, par un utilisateur, de la taille et/ou de la position de la première et de la deuxième zone d'espace (602, 603) .

4. Barrière à micro-ondes par réflexion multidimensionnelle (100) selon l'une des revendications précédentes,
conçue pour permettre la mise en forme numérique de faisceaux.

5. Barrière à micro-ondes par réflexion multidimensionnelle (100) selon l'une des revendications précédentes,
dans laquelle l'émetteur de micro-ondes (203, 204, 711) présente une ligne d'antennes d'émission (702, 703, 704) et le récepteur de micro-ondes (204, 711) une colonne d'antennes de réception (705, 709, 710) qui sont disposées perpendiculairement les unes aux autres.

6. Barrière à micro-ondes par réflexion multidimensionnelle (100) selon l'une des revendications précédentes,
dans laquelle le premier objet (103) est un produit de remplissage ou un produit en vrac ; et/ou
dans laquelle le deuxième objet (104) est une personne.

7. Utilisation d'une barrière à micro-ondes par réflexion multidimensionnelle (100) selon l'une des revendications 1 à 6 pour la surveillance d'objets sur un convoyeur ou pour la surveillance d'une zone de sécurité.

8. Utilisation d'une barrière à micro-ondes par réflexion multidimensionnelle (100) selon l'une des revendications 1 à 6 pour le contrôle de péage de véhicules.

9. Utilisation d'une barrière à micro-ondes par réflexion multidimensionnelle (100) selon l'une des revendications 1 à 6 pour la mesure de vitesse de véhicules.

10. Procédé d'automatisation de processus dans un environnement industriel, pour la surveillance de plusieurs zones d'espace bi- ou tridimensionnelles (602, 603) par une barrière à micro-ondes par réflexion (100) selon l'une des revendications 1 à 6, les zones d'espace s'étendant dans différentes directions de l'espace par rapport à la barrière à micro-ondes par réflexion, comprenant les étapes consistant à :
générer et émettre un premier signal micro-ondes en direction d'une première zone d'espace bi- ou tridimensionnelle (602) et générer et émettre ensuite un deuxième signal micro-ondes en direction d'une deuxième zone d'espace bi- ou tridimensionnelle (603) ;
recevoir des réflexions des premier et deuxième signaux micro-ondes ;
évaluer les réflexions des premier et deuxième signaux micro-ondes afin de déterminer si un premier objet (103) se trouve dans la première zone d'espace ou un deuxième objet (104) dans la deuxième zone d'espace, et générer un premier signal de commutation si le premier objet se trouve dans la première zone d'espace et un deuxième signal de commutation si le deuxième objet se trouve dans la deuxième zone d'espace.

11. Élément de programme qui, lorsqu'il est exécuté sur une unité d'évaluation (202) d'une barrière à micro-ondes par réflexion (100), amène la barrière à micro-ondes par réflexion à mettre en œuvre le procédé selon la revendication 10.

12. Support lisible par ordinateur sur lequel est stocké un élément de programme selon la revendication 11.
